# EUROPÄISCHE PATENTSCHRIFT

(11) **EP 2 516 153 B1**
(45) Veröffentlichungstag und Bekanntmachung des Hinweises auf die Patenterteilung: **26.02.2014**
(21) Anmeldenummer: 10801585.0
(22) Anmeldetag: 23.12.2010
(51) Int. Cl.: B32B 21/04, B32B 21/06, B32B 21/08, B32B 21/12, B44C 3/02, B44C 5/04, E04F 13/00, E04F 15/00

(54) **VERFAHREN UND VORRICHTUNG ZUR HERSTELLUNG EINER BEIDSEITIG BESCHICHTETEN DEKORIERTEN PLATTE**
PROCESS AND APPARATUS FOR PRODUCING A DECORATED PLATE COATED ON BOTH SIDES
PROCÉDÉ ET DISPOSITIF DE FABRICATION D'UNE PLAQUE DÉCORÉE REVÊTUE SUR LES DEUX FACES

(30) Priorität: 23.12.2009 DE 102009060218; 30.06.2010 DE 102010030752
(43) Veröffentlichungstag der Anmeldung: 31.10.2012
(73) Patentinhaber: Surface Technologies GmbH & Co. KG, 15837 Baruth (DE)
(72) Erfinder: ZIEROLD, Ulrich, 8269 Fruthwilen (CH)
(74) Vertreter: Michalski Hüttermann & Partner Patentanwälte
(86) Internationale Anmeldenummer: PCT/EP2010/070636
(87) Internationale Veröffentlichungsnummer: WO 2011/076916

(56) Entgegenhaltungen:
- WO-A1-2009/080772
- DE-A1- 10 156 956
- DE-A1-102007 026 170
- US-A1- 2003 059 639

## Beschreibung

Die Erfindung betrifft ein Verfahren und eine Vorrichtung für die Herstellung einer beidseitig beschichteten dekorierten Platte.

Solche Platten finden vielseitige Verwendung, z.B. als Fußbodenelemente, Wandverkleidung, Möbelplatten. Sie bestehen im Wesentlichen aus einem Träger, zum Beispiel einer Platte aus einem Holzwerkstoff, wie Span- oder Faserplatte, mit einem zumindest auf einer Seite auflaminiertem Dekorpapier, das mit einer Schutzschicht aus einem Kunstharz überzogen ist. Zur Verfestigung dieser oft aus einem Aminoplast bestehenden Schutzschicht wird diese unter Druck und Wärme einer Aushärtung durch Kondensations- und Vernetzungsreaktionen unterzogen. Um Spannungen in der Laminatschicht auszugleichen, die zur Verformung der laminierten Platte führen könnten, wird in der Regel auch auf der anderen Seite des Trägers eine Schicht auflaminiert. Dieser so genannte Gegenzug kann ein einfaches Vliesmaterial wie zum Beispiel Papier sein. Bei Fußbodenplatten kann diese Schicht auch als Trittschalldämmung ausgeführt sein. Für die Anwendung bei der Fertigung von Möbeln werden zweckmäßig beide Seiten des Trägers mit einer Dekorschicht laminiert. Durch die Dekorschicht werden häufig andere natürliche Werkstoffe, wie Massivholz oder Stein, imitiert. Dabei ist es üblich geworden, in die äußere Oberfläche der Schutzschicht ein Relief einzuprägen, das dem imitierten Werkstoff entspricht, beispielsweise mittels eines oberflächlich strukturierten Pressblechs während der Aushärtung.

Verbreitet wird das Dekorpapier vor dem Laminieren auf den Träger mit einem Harz imprägniert. Dabei verändert es jedoch seine Abmessungen, so dass besondere Maßnahmen notwendig sind, um das in die Schutzschicht eingeprägte Relief mit der Darstellung auf dem Dekorpapier in Übereinstimmung zu bringen. Aus der Patentanmeldung DE 10 2007 026 170 A ist es bekannt, ein nicht imprägniertes Dekorpapier zu verwenden und auf eine vorher auf den Träger aufgetragene Schicht aus flüssigen Leim aufzulegen. Das Papier nimmt dabei den Leim auf, so dass seine Poren wie beim Imprägnieren gefüllt werden, behält jedoch seine Abmessungen bei und bleibt so im Register mit der Oberflächenstruktur des Pressblechs. Nach dem Fixieren des Dekorpapiers kann eine Schutzschicht mit oder ohne Trägervlies (meist aus Cellulose) über dem Dekorpapier aufgebracht werden.

Die WO2009/08077 A1 offenbart ein Verfahren zur Herstellung eines dekorierten Laminat mit einem plattenförmigen Kern aus Holz oder Holzwerkstoff, einer dekorativen Schicht auf mindestens einer Seite des Kerns, und eine Deckschicht mit Aminoplast auf der dekorativen Schicht, mit den folgenden Schritten: Bereitstellen der plattenförmigen Kern, Befestigen eines Cellulosevlies Material auf mindestens einer Seite des Kerns, das Drucken der Dekoration auf der freiliegenden Seite der CelluloseVlies, das Anbringen mindestens einer härtbaren Deckschicht auf das gedruckte Dekor und Härten der härtbaren Schichten.

DE 10156956 A1 offenbart ein Verfahren zur Herstellung von Bauplatten, insbesondere Fußbodenplatten, die aus einem Laminat bestehen, dass wenigstens einen Träger, ein Dekorpapier auf der Nutzseite, das mit einem duroplastischen Kunststoff imprägniert ist, sowie eine Gegenzugschicht auf der Rückseite umfasst, wobei das Dekorpapier mit dem duroplastischen Kunststoff in Pulverform bestreut und das bestreute Dekorpapier anschließend unter Einwirkung von Hitze und Druck mit dem Träger verpresst wird.

US 2003/059636 A1 offenbart ein Verfahren zur Herstellung eines dekorativen Holzartikel, wobei das Verfahren die Schritte des Aufbringens einer dekorativen Überzug auf mindestens eine Oberfläche eines hölzernen Gegenstand, Aufbringen einer durch Strahlung härtbaren Pulverbeschichtung auf der äußeren Oberfläche des Überzugs, Erwärmen der aufgebrachten Strahlung härtbaren Pulverbeschichtungszusammensetzung bei einer Temperatur ausreicht, um schmelzen und das Pulver Beschichtung und Aussetzen der aufgetragenen Pulverbeschichtung von Strahlungsenergie, um die Pulverbeschichtung auszuhärten und einen Film auf der äußeren Oberfläche des dekorativen Lasche aufweist.

Nach wie vor muss aber die Trägerplatte vor dem endgültigen Heißpressen und Aushärten der Harzbestandteile in zwei getrennten Arbeitsschritten jeweils für die Ober- bzw. die Unterseite behandelt werden.

Die vorliegende Erfindung stellt sich die Aufgabe, das Verfahren der Herstellung einer beidseitig beschichteten dekorierten Platte weiter zu vereinfachen und insbesondere so zu gestalten, dass die auf der Ober- und Unterseite vorgesehenen Schichten in einem Arbeitsschritt angebracht werden können, sowie eine Vorrichtung zur Durchführung eines solchen Verfahrens zu schaffen.

Diese Aufgabe wird gelöst durch ein Verfahren nach Anspruch 1 und eine Vorrichtung nach Anspruch 10.

Weil der flüssige Leim nicht auf der Oberseite des Trägers sondern auch auf seiner Unterseite eine für eine gewisse Zeit haftende gleichmäßige Schicht bildet, kann in einem Durchgang des Trägers auf beiden Seiten jeweils ein Bahnmaterial so weit fixiert werden, dass es die weiteren Transportvorgänge ohne Beeinträchtigung übersteht. Es kann soviel Leim aufgetragen werden, dass das Bahnmaterial auf beiden Seiten mit dem Leim imprägniert wird. Dabei tritt keine Änderung in den Abmessungen des Bahnmaterials mehr auf. Im Trockenschritt wird die Bindung des Bahnmaterials zum Träger weiter verfestigt. Zur Vorbereitung der Schutzschicht wird schließlich eine pulverförmige aushärtbare Harzzusammensetzung auf die erste Bahn auf der Oberseite des Trägers aufgestreut und durch Erwärmen zumindest teilweise aufgeschmolzen oder gesintert. In diesem Zustand wird das Produkt aus Träger und Beschichtungen in eine heizbare Presse überführt, wo unter Druck und Wärme die Aushärtung des Leims und der Harzzusammensetzung erfolgt. Auf diese Weise wird in einem Durchgang ein für die Weiterverarbeitung fertiges Produkt erzeugt.

Alternativ zum Aufstreuen und Anschmelzen bzw. Schmelzen eines Pulvers kann auch eine pastöse Zusammensetzung auf die auf dem Träger abgelegte Bahn aufgetragen werden, welche die Bestandteile einer solchen ersten pulverförmigen Zusammensetzung und Wasser enthält. Eine solche pastöse Zusammensetzung kann sowohl durch Aufkonzentrieren einer wässrigen Lösung mit den Bestandteilen eines solchen ersten Pulvers als auch durch Anrühren einer ersten pulverförmigen Zusammensetzung mit Wasser erhalten werden. Die Viskosität der Paste ist so einzustellen, dass die Paste vor dem Trocknen nicht von der Bahn abfließt. Bevorzugt hat die pastöse Zusammensetzung einen Feststoffgehalt von mindestens 85 Gewichtsprozent.

Als Trägermaterial eignen sich beispielsweise Faserplatten (MDF oder HDF) und Spanplatten. Die Platten können einzeln zugeführt werden, wobei die erste und die zweite Bahn jeweils entsprechend zugeschnitten werden. Es ist aber auch ein kontinuierliches Arbeiten möglich, wenn die Platten ohne Zwischenraum zugeführt werden oder eine Endlosplatte direkt aus der Plattenmaschine verwendet wird.

Der flüssige Leim ist beispielsweise eine wässrige Zusammensetzung mit Vorstufen eines Melamin- oder Harnstoffleims und einem geeigneten Härter, etwa einer sauren Komponente. Der Leim wird geeignet so ausgewählt, dass die für seine Aushärtung erforderliche Temperatur höher als die angewendete Trocknungstemperatur ist. Dann erfolgt die Aushärtung durch Vernetzung beziehungsweise Kondensation erst in der geheizten Presse. Die Viskosität des Leims wird zweckmäßig so eingestellt, dass es in der Zeit vom Auftragen des Leims bis zum Auflegen der Bahn auch auf der Unterseite des Trägers nicht zur Bildung von Inhomogenitäten oder gar Tropfen kommt. Andererseits ist bei der Viskositätseinstellung zu berücksichtigen, dass das Bahnmaterial bis zum Eintritt in den Trocknungsschritt hinreichend imprägniert, d.h. durchtränkt wird. Gegebenenfalls kann für die erste Bahn eine andere (z. B. niedrigere) Viskosität als für die zweite Bahn eingestellt werden.

Zum Auftragen des Leims auf den Träger können bekannte Verfahren angewendet werden, beispielsweise Walzenauftrag, gegebenenfalls mit Gravur- oder Rasterwalzen, Bürsten, saugfähigen Kissen und dergleichen.

Während das Auflegen der ersten Bahn grundsätzlich allein durch die Schwerkraft erfolgen kann, muss die zweite Bahn durch eine geeignete Anlegevorrichtung mit der Leimschicht auf der Unterseite des Trägers in Berührung gebracht werden. Das kann beispielsweise eine Walze oder eine flexible Rakel sein. Zur besseren Kontrolle des Anlegens wird bevorzugt, auch das erste Band mittels einer solchen Vorrichtung an die Leimschicht auf der Oberseite des Trägers anzulegen.

Nachdem beide Bahnen auf die Ober- und Unterseite der Trägerplatte aufgelegt wurden, wird das so erzeugte Schichtpaket getrocknet. Hierzu kann es durch einen geeigneten Trockenofen geführt werden, in dem es geheizter trockener Luft ausgesetzt wird. Bevorzugt wird zum Trocknen Infrarotstrahlung oder Hochfrequenz angewendet, was auch ohne einen besonderen Ofen möglich ist. Vorzugsweise wird dabei das Schichtpaket nicht so weit erwärmt, dass der Leim bereits völlig aushärtet.

Im nächsten Verfahrensschritt wird eine pulverförmige Zusammensetzung mit einem durch Erwärmen schmelzbaren und aushärtbaren Harz und/oder Bestandteilen, die unter Bildung eines solchen Harzes reagieren können, auf die erste Bahn auf der Oberseite der Trägerplatte aufgetragen. Diese Zusammensetzung soll später die Deckschicht des Laminats bilden. Sie enthält ein oder mehrere thermisch aushärtbare Harze, bevorzugt aus den Gruppen Aminoharze und/oder Phenolharze. Ebenfalls verwendbar sind Epoxid- und Acrylharze. Soweit erforderlich enthält sie auch einen oder mehrere Initiatoren und/oder Katalysatoren (Härter) für die thermische Aushärtung. Bevorzugte Harze sind Harnstoff-Formaldehyd- Harze, Melaminharze, Phenol-Formaldehyd-Harze. Alternativ oder zusätzlich zu solchen Harzen kann die Zusammensetzung auch Stoffe enthalten, die Vorstufen zu diesen Harzen darstellen, wie Melamin, Harnstoff, Phenol, Formaldehyd (z. B. als Paraformaldehyd oder Trioxan) und deren Derivate. Die erfindungsgemäß verwendbaren pulverförmigen Zusammensetzungen enthalten allenfalls geringe Anteile Wasser und sind beispielsweise durch Trocknen von entsprechenden üblichen Lösungen ihrer Bestandteile erhältlich.

Die Teilchengröße der pulverförmigen Zusammensetzung liegt unterhalb von einem Millimeter, bevorzugt zwischen 0,1 µm und 0,5 mm.

Die pulverförmige Zusammensetzung kann weitere Bestandteile enthalten, wie sie zur Verbesserung der Eigenschaften der Deckschicht bekannt sind. Dazu gehören insbesondere harte Feststoffe zur Steigerung der Abriebfestigkeit, wie Korund, Siliciumcarbid, Siliciumdioxid, Glasteilchen, Pyrophyllit, Verstärkungsfasern, beispielsweise aus Cellulose, andere übliche Zusätze für Kunststoffe, wie Stabilisatoren, Aufheller, UV-Absorber, Füllstoffe organischer und anorganischer Natur, Zusätze für optische Effekte, wie Metalliceffekt, Perlglanz, Opaleszenz, Netzmittel, Trennmittel, Fließhilfsstoffe, Haftvermittler. Ein Zusatz von Cellulosefasern und/oder Glasperlen, die größer als die Teilchen der harten Feststoffe sind, die Abnutzung der Pressbleche und -bänder durch diese Feststoffe reduziert werden.

Zum Auftragen der pulverförmigen Zusammensetzung können bekannte Streuvorrichtungen verwendet werden. Es ist auch möglich, das Aufstreuen in zwei oder mehreren Schritten durchzuführen, um die Gleichmäßigkeit der aufgestreuten Schicht zu verbessern und/oder die Pulverschicht zu glätten, beispielsweise mit einer Rakel. Alternativ kann die pulverförmige Zusammensetzung auch durch Anwendung von Elektrostatik nach einem vom Pulverlackieren abgeleiteten direkten Verfahren oder auch indirekt durch Übertragung einer auf einer fotoelektrischen Trommel erzeugten Schicht aufgetragen werden.

Die aufgetragene Menge der pulverförmigen Zusammensetzung richtet sich nach der vorgesehenen Dicke der Deckschicht. Im Allgemeinen sind Aufträge zwischen 1 und 200 g/m² geeignet.

Der Träger mit der so erzeugten Pulverschicht wird dann erwärmt, um das Pulver zu schmelzen. Dabei kann das Pulver vollständig schmelzen oder auch nur angeschmolzen, teilweise geschmolzen bzw. gesintert werden, wenn das Abfließen der Schmelze vermieden werden soll. Andererseits muss die Pulverschicht so weit verdichtet werden, dass beim nachfolgenden Pressen keine Blasen mehr zurückbleiben und die Schicht trüben können. Die Schmelztemperatur hängt von der Zusammensetzung der Harzmischung ab und kann vorteilhaft zwischen 50 und 150°C liegen. Zum Anschmelzen genügen im Allgemeinen Temperaturen bis etwa 120 °C. Um unerwünschtes Fließen des geschmolzenen Harzpulvers zu vermeiden, kann die Schicht danach durch Kühlen wieder erstarrt bzw. verfestigt werden.

Als Wärmequelle zum Anschmelzen der Pulverschicht eignen sich Infrarotstrahler, Mikrowellen oder auch Flammen, wenn vermieden werden kann, dass das Pulver dadurch aufgewirbelt wird.

Nach dem Anschmelzen bzw. Schmelzen der Pulverschicht wird der Träger mit dem Schichtverbund in eine Presse überführt und bei erhöhter Temperatur gepresst. Dabei erfolgt zum einen die Verdichtung der Pulverschicht und andererseits die Aushärtung des Leims und des Harzes der Deckschicht. Dabei kann in bekannter Weise durch Verwendung von strukturierten Pressblechen ein Relief in der Deckschicht erzeugt werden. Die Temperatur der Schichten beim Pressen beträgt etwa 150 bis 200°C, bevorzugt 160 bis 180°C. Wegen der relativ kurzen Verweilzeit des Schichtverbunds in der Presse müssen die Pressbacken beträchtlich wärmer sein, beispielsweise um 30 bis 50 K. Der angewandte Druck liegt geeignet zwischen 2,5 und 10, bevorzugt zwischen 4 und 6 MPa.

Bei einer bevorzugten Ausführungsform des erfindungsgemäßen Verfahrens wird auf der zweiten Bahn ebenfalls zur Ausbildung einer Deckschicht eine Schicht aus einer pulverförmigen Zusammensetzung mit einem durch Erwärmen schmelzbaren und aushärtbaren Harz angebracht. Dabei kann es sich um die gleiche Zusammensetzung handeln, wie die auf die erste Bahn aufgetragene. Es kann aber auch eine andere Zusammensetzung verwendet werden, wenn beide Zusammensetzungen unter den Bedingungen des am Ende stattfindenden gemeinsamen Pressvorgangs die jeweils gewünschten Eigenschaften ergeben. Das Auftragen der Pulverschicht auf die zweite Bahn erfolgt vor dem Auflegen dieser Bahn auf die Unterseite der Trägerplatte und zwar auf die nach dem Auflegen von der Trägerplatte abgewandte, nach unten weisende Seite der Bahn. Es ist daher notwendig, diese Bahn nach dem Aufstreuen und vor dem Anlegen zu wenden. Um zu vermeiden, dass dabei ein Teil des Pulvers von der Bahn abfällt, wird es zweckmäßig vor dem Wenden durch Erhitzen angeschmolzen bzw. gesintert oder auch völlig geschmolzen und durch Kühlen wieder für die folgenden Schritte hinreichend verfestigt. Hierzu können die gleichen Verfahren angewendet werden, wie oben für das Anschmelzen beziehungsweise Sintern der entsprechenden Schicht auf der ersten Bahn beschrieben.

Alternativ dazu kann auf die zweite Bahn vor dem Anlegen an die Leimschicht auf der Unterseite des Trägers eine pastöse wässrige Zusammensetzung mit den Bestandteilen der ersten oder einer zweiten pulverförmigen Zusammensetzung aufgetragen werden. Dies kann auch von der Unterseite der zweiten Bahn her geschehen, wenn die pastöse Zusammensetzung so eingestellt ist, dass sie ausreichend an der zweiten Bahn haftet. Da hiernach vor dem Anlegen an die Unterseite des Trägers noch Umlenkschritte notwendig sein können, wird die pastöse Zusammensetzung bevorzugt nach dem Anlegen gemeinsam mit der Leimschicht getrocknet. Das Umlenken erfolgt vorzugsweise berührungslos.

In einer bevorzugten Ausführungsform wird als erste Bahn ein Dekorpapier verwendet. Dieses Dekorpapier ist im Allgemeinen nicht imprägniert. Die zweite Bahn kann dann beispielsweise ebenfalls ein Dekorpapier sein, wenn eine Möbelbauplatte erwünscht ist, ein Gegenzugpapier oder auch ein Vlies oder eine Folie mit Fähigkeit zur Trittschalldämmung. Solche Bahnmaterialien sind an sich bekannt und bestehen beispielsweise aus Vliesen aus synthetischen oder natürlichen Fasern, synthetischen Schaumstoffen oder Naturmaterialien wie Kork.

Alternativ kann die erste Bahn auch ein einfarbiges Vlies, insbesondere ein einfarbiges Papier sein, auf dem, vorzugsweise nach dem Anlegen und Trocknen, das Dekor durch ein Druckverfahren entsprechend der DE erzeugt wird.

Zur Erfindung gehört auch eine Vorrichtung zur Ausführung des erfindungsgemäßen Verfahrens. Diese Vorrichtung umfasst zumindest eine Zuführ- und Fördervorrichtung, die den Träger vorzugsweise im wesentlichen in einer waagerechten Ebene den weiteren Teilen der Vorrichtung zuführt und durch diese hindurch fördert, Auftragsvorrichtungen für den flüssigen Leim jeweils über und unter der Trägerebene, Abwickelstationen für die erste und die zweite Bahn jeweils über und unter der Trägerebene, Anlegevorrichtungen für die zweite Bahn unter und gegebenenfalls für die erste Bahn über der Trägerebene, eine Trockenvorrichtung, eine Aufstreu- und Heizvorrichtung über der Trägerebene und eine heizbare Pressvorrichtung.

Die Zuführ- und Fördervorrichtung kann in bekannter Weise ausgeführt sein, beispielsweise als Walzen- oder Rollenbahn. Da die Schichten auf der Unterseite der Trägerplatte berührungsempfindlich sein können, beispielsweise nach dem Auflegen der zweiten Bahn auf den nassen Leim, können auch bereichsweise Rollen- oder Greifervorrichtungen nur für den Randbereich der Trägerplatte vorgesehen werden.

Als Auftragsvorrichtungen können bekannte Vorrichtungen eingesetzt werden, wie z.B. Auftragwalzen, gegebenenfalls mit einer Gravur/einem Raster oder einer Rakel versehen, um das Auftragsgewicht zu erhöhen bzw. zu steuern, mit Kissen oder Bürsten versehenen Walzen, oder Sprühvorrichtungen.

Die Abwickelstationen sind so angeordnet, dass sie die erste Bahn über der Trägerebene und die zweite Bahn unterhalb der Trägerebene bereitstellen. Sie können mit den üblichen Mitteln zur Regelung beispielsweise der Bahnspannung und des Seitenkantenlaufs ausgestattet sein.

Die Anlegevorrichtungen sollen sicherstellen, dass die Bahnen gleichmäßig in die Schicht des flüssigen Leims eingelegt werden. Sie können beispielsweise als Andruckwalze oder flexible Rakel ausgebildet sein. Zweckmäßig befinden sie sich in möglichst kleinem Abstand zur jeweiligen Auftragsvorrichtung.

Die Trockenvorrichtung umfasst Mittel zur Erwärmung der mit Leim getränkten Bahnen und gegebenenfalls zur Abführung der verdampften Feuchtigkeit. Die Trocknung kann beispielsweise durch einen geheizten Luftstrom, durch Infrarotbestrahlung oder durch Hochfrequenz beziehungsweise Mikrowellen erfolgen. Es kann zweckmäßig sein, die Trockenvorrichtung als weit gehend geschlossenen Bereich auszubilden, um Umwelteinflüsse fernzuhalten. Die Vorrichtung kann mit Mitteln zur Messung der Restfeuchte und zur Steuerung der Heizmittel versehen sein.

Stromabwärts vom Trockner ist eine Streuvorrichtung für die erste pulverförmige Zusammensetzung vorgesehen. Auch hierfür können bekannte Vorrichtungen eingesetzt werden, zum Beispiel Rüttelsiebe, Bandstreuer, Vibrationsstreuer. Es können auch mehrere gleiche oder unterschiedliche Vorrichtungen nacheinander angeordnet werden, um die Gleichmäßigkeit des Auftrags zu verbessern. Die Streuvorrichtung kann auch Mittel zum Ausgleichen der aufgestreuten Schicht, zum Beispiel eine Rakel, aufweisen.

In einer alternativen Ausführungsform umfasst die erfindungsgemäße Vorrichtung anstelle der Aufstreustation eine Auftragsvorrichtung für eine pastöse Zusammensetzung. Dies kann beispielsweise eine Antragswalze mit einer Rakel zum Einstellen des Auftragsgewichts sein. Diese Auftragsstation kann sowohl vor dem Trockner als auch nach diesem angeordnet sein. Im letzteren Fall ist anstelle der Heizstation eine Trockenstation erforderlich. Um mit der Vorrichtung flexibel arbeiten zu können, ist an dieser Stelle auch eine Vorrichtung brauchbar, die je nach dem durchgeführten Verfahren als Heizstation zum Anschmelzen als auch als Trockenstation arbeiten kann.

Des Weiteren weist die erfindungsgemäße Vorrichtung Mittel zum Erhitzen der aufgestreuten Pulverschicht auf. Dies können beispielsweise Infrarotstrahler, Mikrowellenstrahler, mit Strom oder Gas beheizte Tunnelöfen sein.

Schließlich umfasst die erfindungsgemäße Vorrichtung noch eine heizbare Presse. Dies kann beispielsweise eine Kurztaktpresse sein, wenn die Vorrichtung für die Verarbeitung von Einzelplatten vorgesehen ist. Die Presse kann zur Erzeugung eines Reliefs in der Deckschicht der dekorierten Platte mit Pressblechen, die mit einer Oberflächenstruktur versehen sind, ausgerüstet sein. Sowohl für Einzelplatten als auch für kontinuierliche Trägerplatten eignen sich auch Doppelbandpressen, ggf. mit glatten oder oberflächenstrukturierten Pressbändern versehen.

Eine weitere bevorzugte Ausführungsform der erfindungsgemäße Vorrichtung umfasst außerdem eine zweite Aufstreu- und Heizstation, die unter der Trägerebene zwischen der Abwickelstation für die zweite Bahn und der entsprechenden Anlegevorrichtung angeordnet ist. Sie kann die gleichen oder ähnliche Mittel für das Aufstreuen und Erhitzen wie die oben beschriebene erste Aufstreu- und Heizstation aufweisen. Da in diesem Fall aber die nach dem Anlegen an die Trägerplatte nach unten weisende Seite der zweiten Bahn bestreut werden muss, sind weitere Mittel zum Wenden der Bahn erforderlich. Dies können Umlenkwalzen sein, die zwischen der Abwicklung und der Streueinrichtung sowie zwischen der Heizeinrichtung und der Anlegevorrichtung vorgesehen sind. Da die Oberfläche des aufgestreuten und angeschmolzenen Pulvers empfindlich sein kann, können auch kontaktlose Umlenkmittel wie zum Beispiel ein Airturn nach DE 4415581 verwendet werden. Zusätzlich oder alternativ kann eine der Umlenkwalzen gekühlt sein, um das angeschmolzene Pulver zu verfestigen.

Alternativ umfasst die erfindungsgemäße Vorrichtung anstelle der zweiten Aufstreu- und Heizstation eine zweite Auftragsstation für eine Paste. Diese kann wie die oben beschriebene erste Auftragsstation ausgebildet sein.

Das erfindungsgemäße Verfahren ermöglicht eine beträchtliche Vereinfachung bei der Herstellung von dekorierten Platten. Das bedeutet auch eine Verkleinerung der erforderlichen Vorrichtungen mit entsprechender Senkung des Investitionsvolumens. Da das Material für die Deckschicht im Wesentlichen wasserfrei eingesetzt wird, kann die bisher für die Trocknung aufgewendete Energie eingespart werden. Man benötigt kein Umlauf- und Aufbereitungssystem für flüssig aufzutragende Deckschichtmaterialien. Damit entstehen auch weniger Anlaufverluste an Lösungen und Trägermaterial bei Betriebsunterbrechungen. Die Lagerung und Vorratshaltung von Zwischenprodukten wie imprägniertes Dekorpapier, Overlay und einseitig bearbeiteten Platten wird entbehrlich und insofern das gebundene Kapital reduziert. Weil kein an Cellulose gebundenes Overlay mehr erforderlich ist, kann die Klarheit und Brillanz des Dekors verbessert werden. Auch die Beeinträchtigung der Klarheit durch Restfeuchte in der Deckschicht nach dem Pressen wird vermieden. Abriebvermindernde und andere Zusätze können in die Deckschicht inkorporiert werden, ohne dass es zu Inhomogenitäten durch Entmischung oder zu Verschleiß an den Auftragsvorrichtungen kommt.

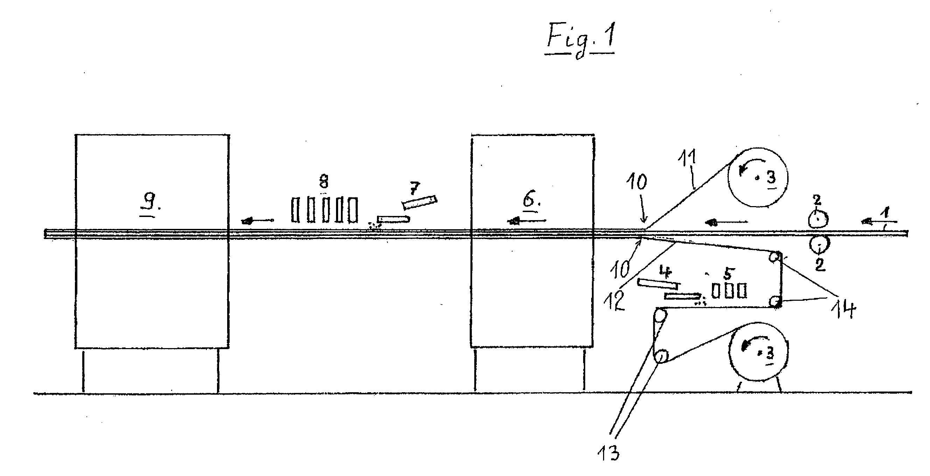

Ein Beispiel für eine erfindungsgemäße Vorrichtung und deren Funktion bei der Ausführung des erfindungsgemäßen Verfahrens ist in der beigegebenen Zeichnung Figur 1 schematisch dargestellt. Von einer (nicht gezeigten) Zuführ- und Fördervorrichtung werden Trägerplatten 1 durch die Auftragsvorrichtung gefördert, wo sie auf Ober- und Unterseite durch Auftragwalzen 2 mit flüssigem Leim beschichtet werden. Bei 10 werden die erste und zweite Bahn 11 bzw. 12 durch nicht gezeigte Rollen in die Leimschichten auf der ober- und Unterseite der Trägerplatte eingelegt. Dieser Schichtverbund gelangt in einen hier geschlossenen Trockner 6, wo der Leim auf die gewünschte Restfeuchte getrocknet wird. Mit der Streuvorrichtung 7 wird die erste pulverförmige Zusammensetzung auf die nun an der Trägerplatte fixierte erste Bahn aufgestreut und mit Infrarotstrahlern 8 zum Sintern beziehungsweise Schmelzen gebracht. Schließlich gelangt die Trägerplatte in die Presse 9, wo die auflaminierten Schichten unter Druck und Wärme ausgehärtet und gegebenenfalls mit einem Relief versehen werden. Wenn auch die zweite Bahn auf der Unterseite der Trägerplatte mit einer Deckschicht versehen werden soll, werden zwischen der Abwicklung 3 und der unteren Anlegestation 10 eine weitere Streuvorrichtung 4 und Infrarotstrahler 5 angeordnet. Dazu wird die Bahn mittels der Umlenkwalzen 13 gewendet, so dass sie nach dem Laminieren nach unten weisende Seite oben liegt und bestreut werden kann. Nachdem Bestreuen und Anschmelzen wird die Bahn durch die Umlenkwalzen 14 wiederum gewendet und der Anlegestation 10 zugeführt.

## Patentansprüche

1. Verfahren zur Herstellung einer beidseitig beschichteten dekorierten Platte, umfassend die Schritte
a) Beschichten eines Trägermaterials auf Ober- und Unterseite mit einem flüssigen, durch Erwärmen aushärtbaren Leim,
b) Auflegen einer ersten Bahn aus Papier oder Vlies auf die Leimschicht auf der Oberseite des Trägermaterials,
c) Auflegen einer zweiten Bahn aus Papier, Vlies oder Folie auf die Leimschicht auf der Unterseite des Träsermaterials,
d) Trocknen des Leims durch Erwärmen des so erzeugten Schichtpakets,
e1) Aufbringen einer ersten pulverförmigen Zusammensetzung mit einem durch Erwärmen schmelzbaren und aushärtbaren Harz und/oder Bestandteilen, die unter Bildung eines solchen Harzes reagieren können, auf die Oberseite der ersten Bahn,
f1) Anschmelzen oder Schmelzen der Pulverschicht auf der ersten Bahn und anschließendem Kühlen bis zum Wiedererstarren oder Verfestigen,
oder
e2) Aufbringen einer Schicht aus einer pastösen Zusammensetzung mit den Bestandteilen einer solchen ersten pulverformigen Zusammensetzung und Wasser auf die Oberseite der ersten Bahn,
f2) Trocknen der Pastenschicht,
g) Aushärten des Leims und der Harzzusammensetzung unter Druck und Wärme.

2. Verfahren nach Anspruch 1, wobei die zweite Bahn vor dem Auflegen auf die Leimschicht ebenfalls mit der ersten oder einer zweiten pulverförmigen Zusammensetzung mit einem durch Erwärmen schmelzbaren und aushärtbaren Harz und/oder Bestandteilen, die unter Bildung eines solchen Harzes reagieren können, bestreut und diese angeschmolzen oder geschmolzen und anschließend gekühlt bis zum Widererstarren oder Verfestigen wird.

3. Verfahren nach Anspruch 1, wobei die zweite Bahn vor dem Auflegen auf die Leimschicht mit einer pastösen Zusammensetzung mit den Bestandteilen der ersten oder der zweiten pulverförmigen Zusammensetzung und Wasser beschichtet und nach dem Auflegen auf die Leimschicht gemeinsam mit dieser getrocknet wird.

4. Verfahren nach Anspruch 1 bis 3, wobei als erste Bahn ein Dekorpapier verwendet wird.

5. Verfahren nach Anspruch 4, wobei als zweite Bahn ein Dekorpapier, ein Gegeozugpapier oder ein Vlies oder eine Folie mit Fähigkeit zur Trittschalldämmung verwendet wird.

6. Verfahren nach einem der vorangehenden Ansprüche, wobei als flüssiger aushärtbarer Leim ein Melamin- oder Harnstoff leim verwendet wird.

7. Verfahren nach einem der vorangehenden Ansprüche, wobei die verwendeten Harzzusammensetzungen ein Melamin-, Phenol-, Harnstoff-, Acryl- oder Epoxidharz und/oder Vorstulen eines Melanin-, Phenol-, Harnstoff, Acryl-oder Epoxidharzes und dafür geeignete Härter enthalten.

8. Verfahren nach einem der vorangehenden Ansprüche, wobei die HarzZusammensetzungen Teilchen eines harten Materials und/oder Cellulosefasern enthalten.

9. Verfahren nach Anspruch 8, wobei die Teilchen aus Aluminiumoxid, Siliciumdioxid, Siliciumcarbid, Titandioxid, Glas oder Pyrophyllit bestehen.

10. Vorrichtung zur Durchführung des Verfahrens nach einem der vorangehenden Ansprüche, umfassend
- eine Zufuhr- und Fördervorrichtung für den Träger (1), die diesen in einer im Wesentlichen waagerechten Trägerebene fördert,
- Auftragsvorrichtungen (2) für flüssigen Leim über und unter der Trägerebene,
- Abwickelstationen (3) für die erste (11) und die zweite (12) Bahn über und unter der Trägerebene,
- Anlegevorrichtungen (10) für die erste und die zweite Bahn über und unter der Trägerebene,
- eine Trockenvorrichtung (6),
- eine Aufstreu- und Heizstation (7, 8) für eine pulverförmige Harzzusammensetzung über der Trägerebene oder eine Auftragsstation für eine Paste
- eine weitere Aufstreu- und Heizstation (4, 5) für eine pulverförmige Harzzusammensetzung unter dar Trägerebene oder eine Auftragsstation für eine Paste zwischen Abwickel- und Anlegestation umfassend,
- gekühlte Umlenkwalzen (14) und
- eine geheizte Pressvorrichtung (9).

## Claims

1. Process for producing a decorated board coated on both sides, comprising the steps of:
a) coating a carrier material on an upper side and an underside with a liquid glue which can be hardened by heating,
b) applying a first web of paper or nonwoven material to the glue layer on the upper side of the carrier material,
c) applying a second web of paper, nonwoven material or film to the glue layer on the underside of the carrier material,
d) drying the glue by heating the layer assembly produced in this way,
e1) applying a first powdered composition with a resin which can be melted and hardened by heating and/or constituents which can react to form such a resin to the upper side of the first web,
f1) initially melting or fully melting the powder layer on the first web and subsequently cooling it until it re-solidifies or sets, or
e2) applying a layer of a pasty composition with the constituents of such a first powdered composition and water to the upper side of the first web,
f2) drying the paste layer, and
g) hardening the glue and the resin composition under pressure and heat.

2. Process according to Claim 1, wherein, prior to application to the glue layer, the second web is likewise scattered with the first or a second powdered composition with a resin which can be melted and hardened by heating and/or constituents which can react to form such a resin, and said composition is initially melted or fully melted and subsequently cooled until it re-solidifies or sets.

3. Process according to Claim 1, wherein, prior to application to the glue layer, the second web is coated with a pasty composition having the constituents of the first or the second powdered composition and water and, after application to the glue layer, is dried jointly therewith.

4. Process according to Claims 1 to 3, wherein a decorative paper is used as the first web.

5. Process according to Claim 4, wherein a decorative paper, a counteracting paper or a nonwoven material or a film having the capability of damping impact sound is used as the second web.

6. Process according to one of the preceding claims, wherein a melamine or urea glue is used as the liquid hardenable glue.

7. Process according to one of the preceding claims, wherein the resin compositions used contain a melamine, phenolic, urea, acrylic or epoxy resin and/or preliminary stages of a melamine, phenolic, urea, acrylic or epoxy resin and hardeners suitable for them.

8. Process according to one of the preceding claims, wherein the resin compositions contain particles of a hard material and/or cellulose fibres.

9. Process according to Claim 8, wherein the particles consist of aluminium oxide, silicon dioxide, silicon carbide, titanium dioxide, glass or pyrophyllite.

10. Apparatus for carrying out the process according to one of the preceding claims, comprising
- a feeding and conveying device for the carrier (1), which conveys the same in a substantially horizontal carrier plane,
- applicator devices (2) for liquid glue above and below the carrier plane,
- unwinding stations (3) for the first (11) and the second (12) web above and below the carrier plane,
- placing devices (10) for the first and the second webs above and below the carrier plane,
- a drying device (6),
- a scattering and heating station (7, 8) for a powdered resin composition above the carrier plane or an applicator station for a paste,
- a further scattering and heating station (4, 5) for a powdered resin composition under the carrier plane or an applicator station for a paste between the unwinding and placing station, comprising
- cooled deflecting rollers (14) and
- a heated pressing device (9).

## Revendications

1. Procédé de fabrication d'une plaque décorative revêtue sur deux faces, le procédé comportant les étapes qui consistent à :
a) appliquer sur le côté supérieur et le côté inférieur du matériau de support une colle liquide durcissable thermiquement,
b) appliquer une première nappe de papier ou de feutre sur la couche de colle située sur le côté supérieur du matériau de support,
c) appliquer une deuxième nappe de papier, de feutre ou un film sur la couche de colle située sur le côté inférieur du matériau de support,
d) faire sécher la colle en chauffant l'ensemble stratifié ainsi formé,
e1) appliquer une première composition poudreuse présentant une résine fusible et durcissable thermiquement et/ou des composants qui peuvent réagir pour former une telle résine sur le côté supérieur de la première nappe,
f1) faire fondre la couche de poudre située sur la première nappe et ensuite la refroidir pour la figer ou la solidifier ou
e2) appliquer une couche de composition pâteuse présentant des composants d'une telle première composition poudreuse et de l'eau sur le côté supérieur de la première nappe,
f2) sécher la couche de pâte et
g) faire durcir la colle et la composition de résine sous l'action de la pression et de la chaleur.

2. Procédé selon la revendication 1, dans lequel avant d'appliquer la deuxième nappe sur la couche de colle, on y dissémine la première ou une deuxième composition poudreuse qui présente une résine fusible et durcissable thermiquement et/ou des composants qui peuvent réagir pour former une telle résine, avec ensuite fusion et ensuite refroidissement jusqu'à ce qu'ils se figent ou se solidifient.

3. Procédé selon la revendication 1, dans lequel avant l'application sur la couche de colle, la deuxième nappe est revêtue d'une composition pâteuse qui présente des composants de la première ou de la deuxième composition poudreuse et de l'eau, pour ensuite les faire sécher avec la couche de colle après y avoir été appliqués.

4. Procédé selon les revendications 1 à 3, qui utilise comme première nappe un papier décoratif.

5. Procédé selon la revendication 4, qui utilise comme deuxième nappe un papier décoratif, un papier de contre-collage, un feutre ou un film capables d'atténuer les bruits de pas.

6. Procédé selon l'une des revendications précédentes, qui utilise comme colle liquide durcissable une colle à la mélamine ou à l'urée.

7. Procédé selon l'une des revendications précédentes, dans lequel les compositions de résine utilisées contiennent une résine de mélamine, de phénol, d'urée, acrylique ou d'époxy et/ou des précurseurs de résine de mélamine, de phénol, d'urée, acrylique ou d'époxy et des durcissants appropriés.

8. Procédé selon l'une des revendications précédentes, dans lequel les compositions de résine contiennent des particules d'un matériau dur et/ou des fibres de cellulose.

9. Procédé selon la revendication 8, dans lequel les particules sont constituées d'oxyde d'aluminium, de dioxyde de silicium, de carbure de silicium, de dioxyde de titane, de glace ou de pyrophyllite.

10. Dispositif en vue de la mise en oeuvre du procédé selon l'une des revendications précédentes, le dispositif comprenant :
un dispositif d'amenée et de transport du support (1) qui transportent ce dernier dans un plan de support essentiellement horizontal,
des dispositifs d'application (2) pour la colle liquide au-dessus et en dessous du plan de support,
des postes de déroulement (3) de la première nappe (11) et de la deuxième nappe (12) au-dessus et en dessous du plan de support,
des dispositifs d'application (10) de la première et de la deuxième bande au-dessus et en dessous du plan de support,
un dispositif de séchage (6),
un poste de dispersion et de chauffage (7, 8) pour une composition poudreuse de résine au-dessus du plan de support ou un poste d'application d'une pâte,
un autre poste de dispersion et de chauffage (4, 5) pour une composition poudreuse de résine en dessous du plan de support ou un poste d'application pour une pâte entre le poste de déroulement et le poste de pose, ce poste comprenant
des cylindres de renvoi refroidis (14) et
un dispositif de pressage (9) chauffé.
